# EUROPEAN PATENT APPLICATION

(11) **EP 2 537 665 A1**
(43) Date of publication of application: **26.12.2012**
(21) Application number: 11170867.3
(22) Date of filing: 22.06.2011
(51) Int. Cl.: B29C 67/00, G03F 7/00

(54) **Improvements for rapid prototyping apparatus and method**

(71) Applicant: 3D Systems, Inc., Rock Hill, SC 29730 (US)
(72) Inventor: The designation of the inventor has not yet been filed
(74) Representative: Hess, Peter K. G.

(57) **Abstract**

The present invention relates to an apparatus (SA) for producing a three-dimensional object (OB) from a light-sensitive material (LSM), said apparatus comprising:
an exposure system (ES) with an illumination source,
a scanning bar to which the exposure system (ES) is mounted,
a control unit (CU),

whereby said exposure system (ES) comprises:
at least one spatial light modulator (SLM) with a plurality of individually controllable light modulators (LM),
input optics (lO) optically coupled to said at least one spatial light modulator (SLM),
output optics (OO) optically coupled to said at least one spatial light modulator (SLM),

wherein said input optics (lO) and output optics (OO) facilitates transmission of light emitted from said illumination source via said individually controllable light modulators (LM) of said spatial light modulator (SLM) to an illumination area (lA),
wherein said spatial light modulator (SLM) enables an establishment of a pattern of the light transmitted through said input optics (lO), according to control signals originating from said control unit (CU),
wherein said output optics (OO) enable focusing of the pattern of light from said at least one spatial light modulator (SLM) onto an illumination area (lA),
wherein the distance d between the output optics (OO) and the illumination area (lA) is between 0.5 and 20 mm,
**characterized in that**
said apparatus (SA) exhibits a **cleaning device (CLD)** suitable to clean or wipe the surface of said exposure system (ES) facing said illumination area (IA), so that said output optics (OO) is enabled to focus correctly the pattern of light from said at least one spatial light modulator (SLM) onto the illumination area (lA) .

## Description

### Field of the invention

The present invention relates to improvements relating to a rapid prototyping apparatus and method for the manufacturing of three-dimensional objects by additive treatment of cross-sections.

### Background

In three-dimensional rapid prototyping, it is important that the optics of the exposure system is not contaminated from contact with the light-sensitive material, which could possibly cause time-intensive cleaning, or even replacement. Hence typically a relatively large distance between the output optics and the illumination area is preferred, in order to avoid risk of contact between the exposure system and the light-sensitive material.

Recently, advanced and performing three-dimensional rapid prototyping equipments have been proposed, which exhibit very small distances d between the output optics and the illumination area, between 0.5 and 20 mm (see patent application W02010/043559A1, incorporated hereby by reference). The apparatus explained in WO2010/043559A1 contains an exposure system containing spatial light modulators which makes a scanning motion above the light sensitive media at a distance from 0.5 to 20 mm. During the scanning motion, light radiation is selectively exposed on the top surface of the sensitive media and causes a photo-chemical reaction, which solidifies the exposed media. Such a reaction is typically exothermic, so that heat is generated and the temperature of the media exposed to light increases.

A protective window is also described in W02010/043559A1, to protect the spatial light modulators from contamination with the light sensitive material. It is however possible that the exothermic reaction in the media accelerates the outgassing of any volatile components in the media and these volatile components may contaminate the protective window. The contamination is undesired, as it can affect the optical path of the light beams and seriously affect the focusing capability and properties of the output optics, and create a contamination of further parts of the apparatus. According to W02010/043559A1, the protective window is part of a replaceable module and is easily removable and re-attachable by the users of the apparatus for the purpose of cleaning any such contamination.

WO2010/043559A1 proposes therefore a removable protective window to protect the spatial light modulators from the problem of contamination.

This solution is however not optimal and exhibits several disadvantages.

The user must remove manually the protective plate and must wipe and clean it manually with tissues, solvents or other cleaning means. This operation is dramatically time consuming and expensive.

Removal and cleaning of the protective window necessarily causes a disruption of the layer-by-layer building process and is therefore undesired. If the contamination rate is high, the cleaning of the window may be needed too frequently or at times where an operator is not available to attend this task, so that the stereolithography process becomes impossible to be carried out.

If resins are used, which contain high volatile components, for example acryloyl morpholine (ACMO), or which produce highly exothermic reactions, the protective window must be always cleaned after only 2-3 exposing cycles of the exposure system. Otherwise, the protective window becomes highly contaminated and does not allow the light beams to reach correctly the illumination area. Under such conditions, no regular and continuous stereolithography process can be carried out at all.

### Summary

The object of the present invention is to solve the above cited problems occurring in the state of the art, and, in particular, to propose an improved rapid prototyping apparatus and method for the manufacturing of three-dimensional objects by additive treatment of cross-sections, which can produce accurate three dimensional parts efficiently, effectively and at high speed in a short time, even when the light sensitive material contains volatile components, produces highly exothermic reactions or releases any kind of contaminants, dust or gases.

The invention relates to apparatus for producing a three-dimensional object from a light-sensitive material, said apparatus comprising:
an exposure system with an illumination source,
a scanning bar to which the exposure system is mounted,
a control unit ,
whereby said exposure system comprises:
at least one spatial light modulator with a plurality of individually controllable light modulators ,
input optics optically coupled to said at least one spatial light modulator,
output optics optically coupled to said at least one spatial light modulator, wherein said input optics and output optics facilitates transmission of light emitted from said illumination source via said individually controllable light modulators of said spatial light modulator to an illumination area,
wherein said spatial light modulator enables an establishment of a pattern of the light transmitted through said input optics , according to control signals originating from said control unit ,
wherein said output optics enable focusing of the pattern of light from said at least one spatial light modulator onto an illumination area,
wherein the distance d between the output optics and the illumination area is between 0.5 and 20 mm,
**characterized in that**
said apparatus exhibits a **cleaning device** suitable to wipe the surface of said exposure system facing said illumination area, so that said output optics is enabled to focus correctly the pattern of light from said at least one spatial light modulator onto the illumination area .

The cleaning device can wipe and clean the surface of the exposure system facing the illumination area after each exposure and curing cycle, so that such surface is perfectly free from any contaminants at the beginning of each exposure cycle. This cleaning process may occur automatically, continuously, at each exposure cycle or every defined number of exposure cycles, without any intervention of maintenance personnel.

In three-dimensional rapid prototyping, if the output optics of the exposure system is just shortly in contact with the light-sensitive material, this may cause contamination of the output optics such that the output optics needs time-intensive cleaning or even replacement. Outgassing and evaporation of the light sensitive material may also produce contamination of the output optics. Hence typically a relatively large distance between the output optics and the illumination area is preferred in order to avoid risk of contamination of the exposure system with the light-sensitive material. Contaminations of the output optics deviate the correct optical paths of the individual light beams used to cure the light sensitive material.

With an arrangement as used in the present invention, even small inaccuracies between the directions of individual light beams may be a serious problem and may cause some voxels to deviate from the intended position. In order to decrease the troubles with alignment of multiple beams, large effort has been put into improving the alignment through modification of the design of the optics. Even though improvements have been observed this way, there is a need for even better alignment of the individual light beams, above all if contaminants are present or generated during the stereolithography process.

According to the present invention it has been shown that advantageous reductions of adverse consequences of misalignment can be observed by lowering the distance between the output optics and the light-sensitive material and by introducing a **cleaning device** suitable to wipe the surface of the exposure system facing the illumination area. This is made possible through the use of output optics with characteristics such that the individual light beams focus at a suitable low distance from the part of the output optics closest to the light-sensitive material. Hereby production costs in the design of the optics may be reduced without risking the efficiency of the apparatus. The foci from the light beams together establish an illumination area, which during manufacturing will at least partly flush with the upper surface of the light-sensitive material.

Furthermore, by lessening the distance between output optics and light-sensitive material and by using a **cleaning device** suitable to wipe the surface of said exposure system facing said illumination area, further beneficial advantages are seen as well. A larger part of the intensity of the light is transferred to the light-sensitive material, which facilitates a faster solidification of the illuminated voxels and thus in turn facilitates a faster scanning process. Hereby a more efficient three-dimensional object manufacturing is obtained.

30 mm has been established as the largest distance where the advantageous above-mentioned results may be obtained. 0.5 mm has been established as the shortest applicable distance without having too high risk of contact with the resin. Preferably, the minimum distance between output optics and the light sensitive material is therefore between 0.5 and 25 mm, more preferably between 1 and 10 mm.

The illumination source of the present invention can emit radiation in the range from deep UV to far IR, e.g. from 200 nm to 100000 nm. The term light applies therefore to radiation in the range from deep UV to far IR, e.g. from 200 nm to 100000 nm. Applications like powder sintering of materials to produce 3 dimensional solid objects are preferably carried out in the infra red energy range with wavelength up to 10000 nm. Applications using stereolithographic baths of curable liquid resins are preferably carried out in the ultra violet energy range with wavelength from 200 nm up to 500 nm.

The exposure system exhibits preferably a releasable **protective window** mounted on the surface of the exposure system facing the illumination area, so that the output optics is protected by any contamination with the light sensitive material.

In an embodiment of the invention, the apparatus comprises at least one releasable protective window between said output optics and said illumination area.

Said protective window or windows are favourably mounted into a **replaceable** module, which can be mounted on the exposure system and correspondingly dismounted, if and when such replaceable module becomes contaminated.

The invention relates therefore also to an apparatus for producing a three-dimensional object from a light-sensitive material, said apparatus comprising:
an exposure system with an illumination source,
a scanning bar to which the exposure system is mounted,
a control unit,
whereby said exposure system comprises:
at least one spatial light modulator with a plurality of individually controllable light modulators,
input optics optically coupled to said at least one spatial light modulator, output optics optically coupled to said at least one spatial light modulator,
wherein said input optics and output optics facilitates transmission of light emitted from said illumination source via said individually controllable light modulators of said spatial light modulator to an illumination area,
wherein said spatial light modulator enables an establishment of a pattern of the light transmitted through said input optics, according to control signals originating from said control unit,
wherein said output optics enable focusing of the pattern of light from said at least one spatial light modulator onto an illumination area,
wherein said apparatus comprises at least one releasable protective window between said output optics and said illumination area ,
wherein said at least one protective window is positioned at a distance of less than 10 mm, preferably less than 5 mm, more preferably less than 2 mm from said output optics,
**characterized in that**
said apparatus exhibits a **cleaning device** suitable to wipe the surface of said **protective window** facing said illumination area, so that said output optics is enabled to focus correctly the pattern of light from said at least one spatial light modulator onto the illumination area.

In a preferred embodiment, the apparatus for producing a three-dimensional object from a light-sensitive material comprises a **recoater** or recoater blade for levelling the surface of the light-sensitive material from which the three-dimensional object is to be prepared, and the **cleaning device** is solidly mounted on said recoater, more specifically at the extremity of such recoater blade.

In a preferred embodiment, the cleaning device comprises a **rigid base** and at least one **soft wiping element**, which is attached to said rigid base, and which is suitable to wipe the surface of the exposure system facing the illumination area or the surface of said protective window facing the illumination area.

In a preferred embodiment, said soft wiping element is made of an absorbing material, for example open celled polymer foams or melamine formaldehyde, and is removably attached to said rigid base.

In an embodiment of the invention, said output optics comprises at least one micro-lens or array of micro lenses and said output optics has such characteristics that it is able to focus the pattern of light on the illumination area in such a way that the focusing distance d between the output optics and the illumination area is between 0.5 and 20 mm.

In an embodiment of the invention, said exposure system comprises at least one micro-lens adapted to focus the light in a distance d of between 1 and 10 mm, preferably between 1.5 and 5 mm from said output optics.

With micro-lenses used according to embodiments of the present invention, a suitable distance between the output optics and the illumination area is obtained.

In an embodiment of the invention, said exposure system comprises at least two micro-lenses adapted to focus the light in a distance d of between 0.5 and 20 mm, preferably between 1 and 10 mm, most preferably between 1.5 and 5 mm from said output optics.

In an embodiment of the invention, the total number of micro-lenses corresponds to at least the total number of light modulators multiplied by the number of micro-lens layers.

According to a preferred embodiment of the invention, each light-beam leaving the input optics will have its own dedicated micro-lenses and light modulator.

In an embodiment of the invention, said exposure system comprises an array of micro-lenses with the total number of micro-lenses being above 200, preferably above 600, more preferably above 2000, most preferably above 6000.

In an embodiment of the invention, said at least one micro-lens has a curvature radius between 300 µm and 400 µm.

According to the present invention it has been found that by using at least one micro-lens with a curvature radius between 300 µm and 400 µm, an ideal focusing distance from the exposure system is obtained for obtaining a suitable distance between the exposure system and the light-sensitive material for use for rapid prototyping.

In an embodiment of the invention, said at least one micro-lens has a curvature radius of between 350 µm and 390 µm, preferably between 360 µm and 375 µm.

In an embodiment of the invention, said at least one micro-lens has a curvature radius of between 310 µm and 350 µm, preferably between 320 µm and 335 µm.

In an embodiment of the invention, said exposure system comprises at least two, preferably at least three, micro-lenses with a curvature radius of between 300 µm and 400 µm.

In an embodiment of the invention, said exposure system comprises at least two micro-lenses wherein at least one of said micro-lenses has a curvature radius of between 350 µm and 390 µm, preferably between 360 µm and 375 µm and at least one other of said micro-lenses has a curvature radius of between 310 µm and 350 µm, preferably between 320 µm and 335 µm.

In a preferred embodiment of the invention three micro-lenses are used, one in a position before the light reaches the spatial light modulators and two in positions after the light passes the spatial light modulators.

In an embodiment of the invention, said at least one micro-lens has a back focal length of above 400 µm.

In a preferred embodiment of the invention three micro-lenses are used, one with a back focal length above 420 µm and two with back focal lengths of above 490 µm.

In an embodiment of the invention, said at least one micro-lens focuses the light sent through said at least one micro-lens into a beam spot with a diameter of less than 200 µm at a focusing distance from the output optics of between 0.5 mm and 20 mm.

In an embodiment of the invention, said at least one micro-lens focuses the light sent through said at least one micro-lens into a beam spot with a diameter of less than 150 µm at a focusing distance from the output optics of between 1.5 mm and 5 mm.

In an embodiment of the invention, said apparatus comprises a vat comprising light-sensitive material in an amount so that the surface of said light-sensitive material substantially coincides with said illumination area.

The light sensitive material is preferably a photocurable composition comprising preferably a low molecular weight component characterised by an average molecular weight below 1000 g/mol, preferably below 500 g/mol, more preferably below 300 g/mol. Such low molecular weight component is preferably bearing at least one polymerizable group. Such low molecular weight component is preferably selected from the following list of components:
- DMAA: N,N-dimethylacrylamide
- DEAA: N,N-diethylacrylamide
- HEAA: N-(2-hydroxyethyl)-acrylamide
- N-IBMA: N-(isobutoxymethyl)-acrylamide
- Diacetone Acrylamide: Diacetone Acrylamide
- NIPAM: N-(isopropyl)acrylamide
- NVC: N-vinylcaprolactam
- NVC-L: N-vinylcaprolactam liquid
- TEGDVE (Divinyl): Triethyleneglycol-divinylether
- CHVE (Divinyl): 1,4-Cyclohexane-dimethanol-divinylether
- SR259: Polytheyleneglycol (200) diacrylate
- SR344: Polytheyleneglycol (400) diacrylate
- SR610: Polytheyleneglycol (600) diacrylate
- SR285: Tetrahydrofurfuryl acrylate
- SR339: 2-Phenoxyethyl acrylate
- CD420: Acrylic monomer (not specified)
- SR506: Isobornyl acrylate
- SR256: 2-(2-Ethoxyethoxy)ethyl acrylate
- SR395: Isodecylacrylate
- SR531: Cyclic trimethylol formal acrylate
- CN131: Low viscosity aromatic monoacrylate (not specified)
- AAEM: Acetoacetoxyethyl methacrylate
- CD406: 1,4-cyclohexanedimethanol diacrylate
- CD536: Difunctional acrylate ester (not specified)
- SR508: Dipropyleneglycol diacrylate
- SR306: Tripropyleneglycol triacrylate
- SR230: Diethyleneglycol diacrylate
- SR272: Triethyleneglycol diacrylate
- EM2202: Hydroxypivalyl Hydroxypivalate Diacrylate
- SR833: Tricyclodecane dimethanol diacrylate
- SR238: 1,6-Hexanediol diacrylate
- CD561: Alkoxylated hexanediol diacrylate
- SR348L: Ethoxylated (2) bisphenol A dimethacrylate
- SR480: Ethoxylated (10) bisphenol A dimethacrylate
- SR349: Ethoxylated (3) bisphenol A diacrylate
- CN2302: Hyperbranched polyester acrylate oligomer (f=16)
- CN2303: Hyperbranched polyester acrylate oligomer (f=6)
- CN2304: Hyperbranched polyester acrylate oligomer (f=18)
- SR420 (CD420): Acrylic monomer (not specified)
- SR268: Tetraethyleneglycol diacrylate
- SR504: Ethoxylated (4) nonylphenol acrylate
- SR601 E: Ethoxylated (4) bisphenol A diacrylate
- SR602: Ethoxylated (10) bisphenol A diacrylate
- DMAPAA: N,N-dimethylaminopropyl acrylamide
- SR9035: Ethoxylated (15) trimethylol propane triacrylate
- XP1/0767: Albidur (Core shell silicone rubber in SR494)
- TP Phosphite: Triphenylphosphite
- TPO: 2,4,6-Trimethylbenzoyldiphenylphosphine oxide
- SR595: Acrylate ester monomer (not specified)
- Cyclohexyl Methacrylate: Cyclohexyl Methacrylate
- Benzyl Methacrylate: Benzyl Methacrylate
- DDPDA: dihydrodicyclopentadienyl acrylate
- TBCHA: 4-tert-butyl-cyclohexylacrylate
- CN386: Acrylated amine (not specified)
- CN3715: Acrylated amine (not specified)
- CN3735: Acrylated amine (not specified)
- SR272: Triethyleneglycol diacrylate
- Ebecryl 1039: Urethane monoacrylate
- Benzyl Acrylate: Benzyl Acrylate
- Cyclohexyl Acrylate: Cyclohexyl Acrylate

The photocurable composition may comprise favourably acryloyl morpholine (ACMO). The average molecular weight Mw can be measured by the GPC technique (gel permeation chromatography), which is the standard analytical technique, well known to persons skilled in the art, to carry out this kind of determination (see for example F.W. Billmeyer Jr., "Textbook of Polymer Science", John Wiley & Sons 1984, pages 16-21 and 214-228)

In an embodiment of the invention, the minimum distance between said output optics and said surface of said light-sensitive material is between 0.5 mm and 20 mm, preferably between 1 mm and 10 mm.

Moreover the invention relates to a **method of manufacturing** a three-dimensional object from a light-sensitive material by use of an apparatus as described above.

The invention relates to **a method for manufacturing** a three-dimensional object from a light-sensitive material, comprising the steps of:
A. producing a first layer of a liquid light-sensitive material;
B. wiping with a cleaning device the surface of an exposure system facing the surface of the liquid light-sensitive material or the surface of a protective window facing the surface of the liquid light-sensitive material, in order to remove contamination, dust or condensed materials;
C. scanning an exposure system across said first layer in a predetermined exposure direction (SD), in order to expose said first layer to UV (ultraviolet) radiation, so as to solidify said first layer with a predetermined pattern;
D. applying a second layer of a liquid light-sensitive material onto the first solidified layer;
E. wiping with the cleaning device the surface of the exposure system facing the surface of the liquid light-sensitive material or the surface of the protective window facing the surface of the liquid light-sensitive material, in order to remove contamination, dust or condensed materials;
F. scanning the exposure system across said second layer in the predetermined exposure direction (SD), in order to expose said second layer to UV radiation, so as to solidify said second layer with a predetermined pattern;
G. repeating the steps A. to F. until a predetermined 3-dimensional object is formed.

Before the exposure step (scanning of the exposure system), the step of wiping and cleaning with a cleaning device the surface of the exposure system facing the surface of the liquid light-sensitive material or the surface of the protective window facing the surface of the liquid light-sensitive material occurs, in order to remove contamination, dust or condensed materials.

In this way, it is obtained that the time wasted on stoppage of the system may be eliminated, as compared to prior art, where an obstacle or outgassing may cause contamination of the apparatus resulting in a time-consuming cleaning process or alternatively an expensive replacement of at least a part of the elements of the apparatus.

The **cleaning step** is especially advantageous in exposure systems, where the distance between the exposure system and the surface of the light-sensitive material is kept relatively low. This means that even very small protrusions from the surface or slightly volatile components in the resin may be problematic and are important to be cleaned and wiped off.

The invention relates **also to a method for manufacturing** a three-dimensional object from a light-sensitive material, comprising the steps of:
a) producing a first layer of a liquid light-sensitive material;
b) **scanning a recoater** across said first layer in a recoating direction (RECD), in order to level the surface of the liquid light-sensitive material from which the three-dimensional object is to be prepared,
   whereby, at the same time, a cleaning device solidly mounted onto the recoater wipes the surface of an exposure system facing the surface of the liquid light-sensitive material or the surface of a protective window facing the surface of the liquid light-sensitive material, in order to remove contamination, dust or condensed materials;
c) **scanning an exposure system** across said first layer in a predetermined exposure direction (SD) perpendicular to the recoating direction (RECD), in order to expose said first layer to UV radiation, so as to solidify said first layer with a predetermined pattern;
d) applying a second layer of a liquid light-sensitive material onto the first solidified layer;
e) scanning the recoater across said second layer in the recoating direction (RECD), in order to level the surface of the liquid light-sensitive material from which the three-dimensional object is to be prepared,
   whereby, at the same time, the cleaning device solidly mounted onto the recoater wipes the surface of the exposure system facing the surface of the liquid light-sensitive material or the surface of the protective window facing the surface of the liquid light-sensitive material (LSM), in order to remove contamination, dust or condensed materials;
f) scanning the exposure system across said second layer in the predetermined exposure direction (SD) perpendicular to the recoating direction (RECD), in order to expose said second layer to UV radiation, so as to solidify said second layer with a predetermined pattern;
g) repeating the steps a) to f) until a predetermined 3-dimensional object is formed.

Before the exposure step (scanning of the exposure system), the step of wiping and cleaning with a cleaning device the surface of the exposure system facing the surface of the liquid light-sensitive material or the surface of the protective window facing the surface of the liquid light-sensitive material occurs again, in order to remove contamination, dust or condensed materials. But, in this case, the cleaning device is solidly mounted onto the recoater and the cleaning step and the recoating step are carried out simultaneously at the same time. While the recoater blade is scanned across a photocurable resin layer in the recoating direction, in order to level the surface of the liquid light-sensitive material from which the three-dimensional object is to be prepared, the cleaning device is solidly mounted at the extremity of the recoater blade and is positioned therefore under the exposure system or the protective window and remains in sliding contact with the exposure system or the protective window. In this way, the exposure system or the protective window are automatically wiped and cleaned from any contaminants during the recoating process.

As previously mentioned, the exposure system may pass above the resin with a small distance when it is performing a scan to expose the surface of the resin. Due to this very small distance there is a risk of contamination of resin on the bottom surface of the exposure system during the scan across the resin surface. Such contamination may e.g. stem from outgassing or parts of the built product, which during manufacturing may protrude slightly from the surface. This may e.g. be caused by the fact that a recoater accidently touches the part on the building plate, or, for some resins, that stress in the already built lower-laying layers may cause unevenness of the built surface of the previous layer. The contamination may also arise due to poor layer quality as a result of recoating for example parts including trapped volumes and large flat areas or outgassing from the liquid resin.

If the exposure system touches a protruding part the bottom surface of the exposure system will be contaminated with resin. Consequently the surface must be cleaned from the resin before the exposure can be resumed, and the cleaning is a time consuming and expensive process. Furthermore there is a risk of contamination or damaging of the micro-optics and SLM-modules in the exposure system.

This problem can be solved according to the present invention thanks to the introduction of a **cleaning step** of wiping the surface of said exposure system facing said illumination area, so that said output optics is enabled to focus correctly the pattern of light from said at least one spatial light modulator onto the illumination area .

In the method of manufacturing a three-dimensional object from a light-sensitive material according to an embodiment of the invention, the recoater is scanned across said light-sensitive material for levelling the surface of the light-sensitive material from which the three-dimensional object is to be prepared, and, at the same time, the cleaning device, solidly mounted at the extremity of the recoater, **slides preferably in contact** with the surface of the exposure system facing the surface of the liquid light-sensitive material or the surface of the protective window facing the surface of the liquid light-sensitive material, in order to remove possible contamination, dust or condensed materials.

Preferably, at least one soft wiping element part of a cleaning device slides in contact with the surface of said exposure system facing the surface of the liquid light-sensitive material or the surface of said protective window facing the surface of the liquid light-sensitive material during the recoating step, in order to remove contamination, dust or condensed materials.

The present rapid prototyping apparatus is capable of illumination with multiple beams, where the multiple beams are desired to be protected and hence some kind of protection is desired. However the inclusion of a protective window in the path of the multiple beams introduces possible troublesome alignment issues as light propagating through different media will tend to lose intensity and to displace the light beams when passing the transition between different media.

Displacement of light beams due to media transitions may be problematic in any kind of rapid prototyping apparatus; however the displacement is especially problematic when a multiple beam apparatus is used in comparison to e.g. a single beam laser system, where issues concerning individual deviating displacements between different beams do not arise.

With the present invention it has been observed that troubles with the light transitions through a protective window may be avoided by moving the exposure system close to the light-sensitive material. For example it may be advantageous when the minimum distance from the output optics is less than 10 mm from the light-sensitive material. This causes dramatic contamination problems of the protective window by the light sensitive material, which can be however solved by a cleaning and/or wiping step, according to the invention.

According to embodiments of the invention, the protective window is releasable in order to facilitate an easy replacement of the protective window, if the protective window has been contaminated or greased.

In an embodiment of the invention, said apparatus comprises fastening means for carrying said at least one protective window between said output optics and said illumination area.

Fastening means for carrying at least one protective window may be any fastening means suitable for the purpose. A number of different means will be known to the person skilled in the art. An example is a frame mounted on the exposure system, into which frame the at least one protective window or the replaceable module on which the at least one protective window is mounted can be inserted and thereby fixed to the system.

In an embodiment of the invention, said at least one protective window is held by said fastening means.

During use of the apparatus, the protective window or windows are held in place by the fastening means in order to give the desired protection.

In an embodiment of the invention, said at least one protective window is positioned at a distance less than 10 mm, preferably less than 5 mm, more preferably less than 2 mm from said output optics.

According to a preferred embodiment of the invention, the protective window is mounted as close as possible to the output optics in order to make the system as compact as possible.

In an embodiment of the invention, said at least one protective window is part of a replaceable module.

In a preferred embodiment of the present invention, the protective windows are gathered in replaceable modules, each containing e.g. 16 protective windows. This number could within the scope of the present invention be any number, e.g. 2, 4, 8, 9, 12 or 20. In this way the full replaceable module may be replaced if contamination has occurred on one or more of the windows. This process of replacement will typically be quicker and easier than replacing a single window.

In an embodiment of the invention, said fastening means are designed to carry said replaceable module.

Besides the above-mentioned advantage of being able to replace a whole module at once, furthermore it is advantageous that fastening means for only one element, namely the full module, is necessary on the exposure system.

In an embodiment of the invention, said at least one protective window covers more than one spatial light modulator.

In a preferred embodiment of the invention, each protective window covers 4 spatial light modulators. However in another embodiment each spatial light modulator may have its own protective window and in further other embodiments each protective window may cover e.g. 2, 3, 6, 9 spatial light modulators.

In an embodiment of the invention, the focusing distance is less than 10 mm, preferably less than 5 mm.

In an embodiment of the invention, the transmittance T in the wavelength-range of 300-400 nm of said at least one protective window is above 0.6, preferably above 0.8, most preferably above 0.9.

In an embodiment of the invention, said at least one protective window is made from fused quartz.

Several different kinds of glass may be used for the protective window; however, in order to ensure a high transmission of UV-light through the window, a low amount of impurities in the glass is preferred, preferably fused quartz is used.

In an embodiment of the invention, said replaceable module is mounted on said exposure system.

In a preferred embodiment of the invention, the replaceable module containing the protective windows is mounted directly on the exposure system. Hereby a small fixed distance between the exposure system and the protective windows is ensured.

In an embodiment of the invention, the thickness of said at least one protective window is less than 4 mm, preferably less than 2 mm, most preferably less than 1 mm.

In an embodiment of the invention, said at least one protective window has dimensions of less than 100 mm x 40 mm x 4 mm.

In an advantageous embodiment of the invention, the exposure system comprises a scanning bar which facilitates that the exposure system can be scanned across the surface of the light-sensitive material in order to illuminate the desired portions of said light-sensitive material.

In an embodiment of the invention, during operation the lowest part of said exposure system is positioned less than 5 mm from the upper surface of said light-sensitive material.

According to preferred embodiments of the present invention the distance between the exposure system and the light-sensitive material is kept low in order to utilize the energy effectively and lessen the possible problems due to chromatic aberration in the lenses when using non-monochromatic light.

In an embodiment of the invention, said input optics comprises collimation optics.

In an embodiment of the invention, said output optics comprises focus optics.

In an embodiment of the invention, said exposure system comprises light-emitting diodes.

According to an aspect of the invention, the light emitting diode may be e.g. a laser diode, ultraviolet diode or any other light sources emitting light in form of electromagnetic radiation.

According to an aspect of the invention preferred light-emitting diodes used in the illumination source have a shield of e.g. a polymer, glass or plastic material, covering the light-emitting area. This shield may be used as pre-focusing and/or precollimating optics of the light emitted from the light-emitting area.

In an embodiment of the invention, said apparatus further comprises a vat for containing the light-sensitive material.

In an embodiment of the invention, said apparatus further comprises a building plate.

In an embodiment of the invention, said control unit further comprises means for adjusting the vertical location of said building plate relative to the output optics.

In an embodiment of the invention, said exposure system comprises more than one spatial light modulator.

In an advantageous embodiment of the invention more than one spatial light modulator is used e.g. to increase the width of the exposure system and thereby increase the illumination area to be able to build larger object or a larger number of small objects at the same time.

In an embodiment of the invention, said exposure system is built of illumination modules, wherein said illumination modules comprises at least one light-emitting diode and at least one spatial light modulator.

In an advantageous embodiment of the invention the exposure system is built of illumination modules which make the exposure system flexible. Hence customers may request an exposure system adapted to customer specific production of large or small items.

In an advantageous embodiment of the invention where the exposure system is built of illuminations modules, it may be easier or cheaper to maintain the exposure system. Only one illumination module and not the whole exposure system are to be replaced, if one spatial light modulator is damaged.

In an embodiment of the invention, said exposure system comprises more than one light-emitting diode.

According to an embodiment of the invention more than one light-emitting diode is used to increase the intensity of emitted light. With an increased intensity of light it is possible to increase the scanning speed of the exposure system across the illumination area.

In an embodiment of the invention, light from one specific light-emitting diode is illuminating one specific spatial light modulator.

According to an embodiment of the invention one specific light-emitting diode is dedicated to one specific spatial light modulator. This may be very advantageous because it then becomes possible to completely turn off one light-emitting diode if patterned light from one of the spatial light modulators does not have to be used to build one layer of an object. Turning off one light-emitting diode reduces the energy consumption as well as the generation of heat.

According to an embodiment of the invention the relationship between the light-emitting diodes and the spatial light modulators is a one to one relationship. This one to one relationship adds a high degree of flexibility, e.g. enables the exposure system to turn on or off each individual spatial light modulator.

In an embodiment of the invention, said input optics comprises at least one array of micro-lenses.

According to an embodiment of the invention the input optics may at least partly be an array of micro lenses. The array of micro lenses may e.g. be used for focusing the light from the light emitting diodes into the apertures of the spatial light modulators.

According to an embodiment of the invention the input optics may comprise collimation optics for collimating the light from the light-emitting diodes. Furthermore, additional optics may be comprised in the input optics depending on the function of the input optics.

In an advantageous embodiment of the invention the input optics may comprise modules of micro lenses, hence if the exposure system comprises more than one illumination module each illumination module may be attached to one input optic module.

In an embodiment of the invention, said input optics splits the light from the light-emitting diodes into multiple beams.

According to an embodiment of the invention the multiple beams from the input optics are in a one to one relationship with the aperture of the one or more spatial light modulators. This may be very advantageous because then all light from the light emitting may be used to illuminate the light-sensitive material.

According to an embodiment of the invention the multiple beams from the input optics exceed the number of apertures of the one or more spatial light modulators. To allow more beams from the input optics than apertures of the spatial light modulators may e.g. add flexibility to the input optics because the input optics may then not fit exactly to the spatial light modulators. Furthermore, additional beams from the input optics may be used e.g. to measure the intensity in the light from the light-emitting diodes.

In an embodiment of the invention, light guides guide light from said light-emitting diode to said spatial light modulator.

According to an embodiment of the invention the light-emitting diodes are physically placed at a distance from the spatial light modulators, hence it is very advantageous to use light guides such as e.g. optical fibres to guide light from the light emitting diodes to the spatial light modulators.

According to an embodiment of the invention the light guides may be part of the input optics, hence the light guides may e.g. shape, align or guide light so that it is ready to be patterned by the spatial light modulators.

In an embodiment of the invention, said apparatus facilitates that said exposure system may be scanned across said light-sensitive material.

In an advantageous embodiment of the invention the exposure system is scanned across a light-sensitive material. The spatial light modulators patterns light to cure an illumination area on the light-sensitive material, when the exposure system is scanned across the light-sensitive material. The exposure head is scanned across the light-sensitive material at least one time per layer of the object to be built.

In an embodiment of the invention, said output optics comprises at least one array of micro-lenses.

In an advantageous embodiment of the invention the patterned light from the at least one spatial light modulator is focused onto the light sensitive material by means of said array of micro lenses to ensure a uniform and precise curing of the light sensitive material.

In an advantageous embodiment of the invention the output optics may comprise modules of micro lenses, hence if the exposure system comprises more than one illumination module each illumination module may be attached to one output optic module.

Moreover the invention relates to the use of a photocurable resin in an apparatus according to the invention.

Moreover the invention relates to a method of curing a photocurable composition in an apparatus according to the invention.

Moreover the invention relates to a three-dimensional object produced by a method according to the invention.

Furthermore the invention relates to a three-dimensional object produced by use of an apparatus according to the invention.

### Figures

The invention will now be described more in detail with reference to the figures of which
fig. 1 illustrates a simplified cross-sectional view of a stereolithography apparatus according to the state of the art,
fig. 2 illustrates a part of the exposure system of the stereolithography apparatus,
fig. 3 illustrates a simplified cross-sectional view of a stereolithography apparatus according to an embodiment of the invention
fig. 4 corresponds to a part of fig. 3 rotated of 90°,
fig. 5 illustrates the cleaning device according to an embodiment of the invention,
fig. 6 illustrates a protective window,
fig. 7 illustrates a replaceable module comprising a protective window,
fig. 8 illustrates a cross-sectional view of part of a stereolithography apparatus comprising a replaceable module,
fig. 9 illustrates an example of a stereolithography apparatus according to an embodiment of the invention,
fig. 10 illustrates a further view of a stereolithography apparatus according to an embodiment of the invention, and
fig. 11 illustrates a further view of a stereolithography apparatus according to an embodiment of the invention.

### Detailed description

Examples of a method and an illumination unit for point illumination of a medium and how to collimate light and illuminate suitable to embodiments of the present invention can be seen e.g. from WO 98/47048 or WO2010/043559A1, hereby incorporated by reference.

Examples of an illumination unit and a method of point illumination of a medium comprising a plurality of light emitters in the form of light guides which are arranged to illuminate at least one illumination face via a light valve arrangement suitable to embodiments of the present invention can be seen e.g. from WO 98/47042, hereby incorporated by reference.

An example of a rapid prototyping apparatus for the manufacturing of three-dimensional objects by additive treatment of cross-sections comprising a wholly or partially light-sensitive material is described in WO 00/21735, hereby incorporated by reference. This apparatus comprises at least one light source for illumination of a cross-section of the light-sensitive material by at least one spatial light modulator of individually controllable light modulators, wherein at least one light source is optically coupled with a plurality of light guides arranged with respect to the spatial light modulator arrangement in such a manner that each light guide illuminates a sub-area of the cross-section.

Within the context of this description and the appended claims, with the term "illumination area" is meant an approximated plane as defined by a number of focus points of the individual light beams originating from the output optics.

Within the context of this description and the appended claims, with the term micro-lenses is meant small lenses, generally with diameters less than one millimetre (mm).

Within the context of this description and the appended claims, with the term focusing distance d is meant the minimum distance from the output optics to the illumination area.

Within the context of this description and the appended claims, with the term light-sensitive material is meant any material sensitive to light and suitable for three-dimensional rapid prototyping. Such material will be well-known to the skilled person and could advantageously be different kinds of photocurable resins; hence the term resin and the term light-sensitive material are used interchangeably herein.

Within the context of this description and the appended claims, with the term Illumination Area is meant the cross-sectional area of the light beam at the distance, where the light beam is best focused.

Within the context of this description and the appended claims, a pattern of light can be caused by any combination of the light modulators, e.g. when all light modulators are open, a single line of light modulators are open, some individual light modulators are open or any other combination of settings of the light modulators.

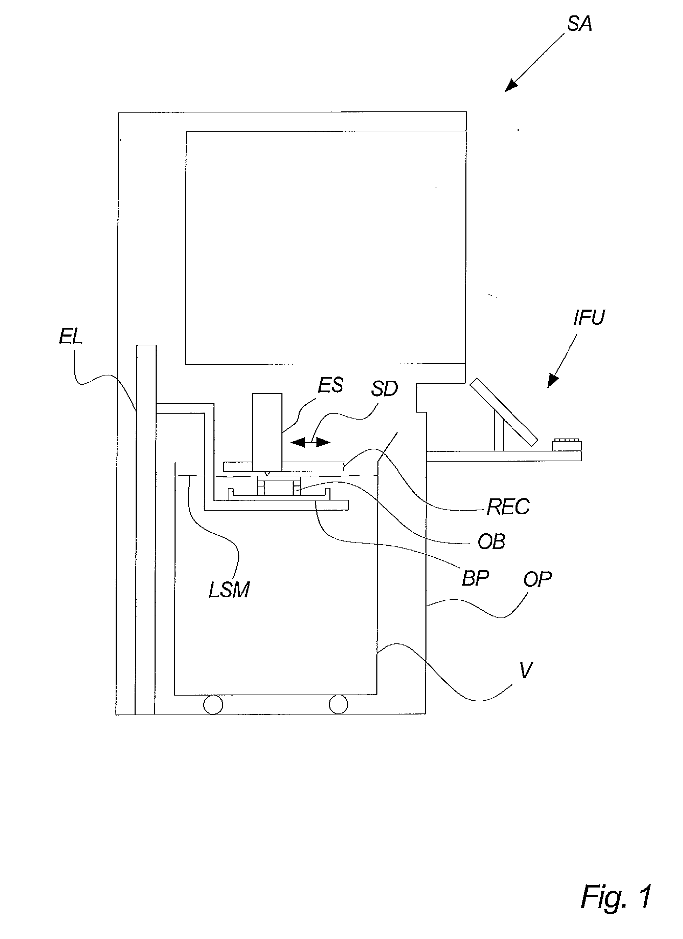

Figure 1 illustrates a simplified cross-sectional view of a stereolithography apparatus SA for building three-dimensional objects OB according to the state of the art (WO2010/043559A1). The three-dimensional objects OB are built layer-wise through the curing of light sensitive material LSM when exposed to light from the exposure system ES.

The stereolithography apparatus SA comprises a building plate BP on which one or more three-dimensional objects OB is built. The building plate BP is moved vertically into a vat V comprising light-sensitive material LSM by means of an elevator EL. A recoater REC is scanned across the new layer of light-sensitive material LSM to ensure uniformity of the new layer. The scanning direction SD of the exposure system ES is indicated with arrows.

According to the above description the three-dimensional object OB is built by exposing a layer of light-sensitive material LSM with patterned light from the exposure system ES. The part of the light-sensitive material LSM is cured according to the pattern of light to which it is exposed. When a first layer is cured, the building plate BP with the cured first layer of the three dimensional object OB is lowered into the vat V and the recoater REC scans across the layer of light-sensitive material LSM in order to establish a fresh upper layer of light-sensitive material LSM. Then the exposure system ES is again scanned across the light-sensitive material LSM curing a new layer of the three-dimensional object OB.

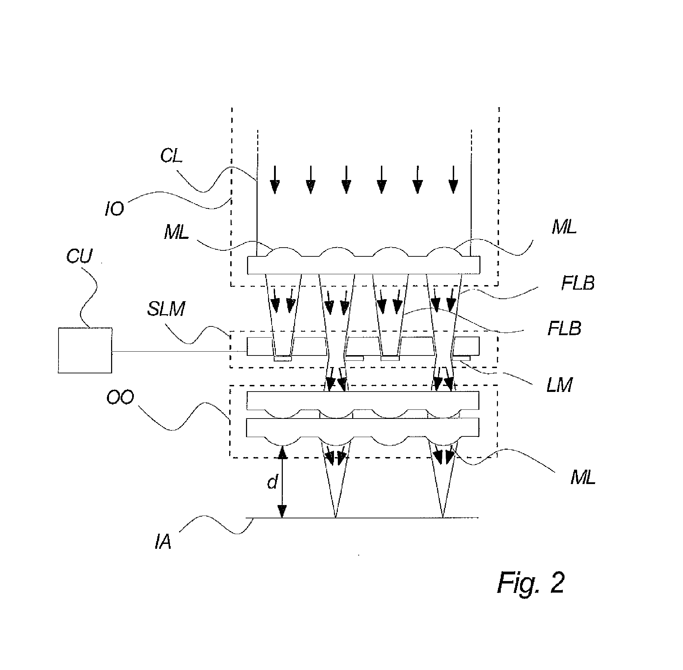

As mentioned, the stereolithography apparatus SA comprises an exposure system ES. The exposure system ES comprises an illumination source, which may be a UV-lamp, a diode, a number of diodes, or any other means of illumination source known by the skilled person suitable for the purpose of curing the light-sensitive material. Following the illumination source there are means for transforming the light from the illumination source into collimated light together with input optics lO, spatial light modulators SLM, and output optics OO. The part of the exposure system following the means of collimating the light is seen on fig. 2.

At least part of the exposure system ES is scanned across the light-sensitive material LSM in a scanning direction SD, illuminating an illumination area IA on the surface of the light-sensitive material LSM according to a digital layer-wise representation of the three-dimensional object OB. The exposure system ES is curing the light-sensitive material LSM in the illumination area lA, thereby forming the three-dimensional object OB.

The vat V may be equipped with means for moving the vat V such as wheels, interactions with a rail, track, forklifts etc. Hence the vat V may be removably located in the stereolithography apparatus SA e.g. accessible via an opening OP to refill the vat V with light-sensitive material LSM or for easy removal of three-dimensional objects OB from the building plate BP.

It should be noted that it is possible, e.g. by means of the illustrated elevator EL or other devices, to move the vat V vertically instead of moving the building plate BP.

The digital layer-wise representation of the three-dimensional object OB may be provided to the stereolithography apparatus SA via an interface unit IFU. The interface unit IFU may comprise input interfaces, such as e.g. a keyboard or pointer and output interfaces such as e.g. a screen or a printer, to handle communication via interfaces such as e.g. LAN (LAN; Local Area Network), WLAN (WLAN; Wireless Local Area Network), serial communication etc. Furthermore the interface unit IFU may comprise data processors, memory's and/or means for permanent storing of data.

Figure 2 illustrates a simplified cross-sectional view of the part of the exposure system following the means of collimating the light.

In order to transmit light from the illumination source to at least part of the light modulators LM of the at least one spatial light modulator SLM, light guides are used between the means for collimation and the input optics lO. Light guides are used between the illumination source and the means for collimation. Such light guides may e.g. comprise optical fibres (e.g. made of polymer, plastic, glass etc.), optics, lens arrays, reflectors, etc.

The light-sensitive material LSM may be a determining factor for the choice of illumination source. Typically the light-sensitive material LSM is cured when exposed or illuminated with light of high intensity within wavelengths between 200-500 nm. Typically light with a wavelength peaks between 300 and 400 nm are the most optimal for curing the preferred type of light-sensitive material LSM. Of course light with other than the mentioned wavelengths may be used if special light-sensitive material LSM is required.

It should be noted that the light-sensitive material LSM is also cured when it is exposed to a broad-spectrum light e.g. from the general illumination distribution of a room, because the general illumination distribution of a room often also contains light with wavelengths on which the light-sensitive material LSM reacts. Curing of light-sensitive material LSM from such stray light is not desirable because it is slow and not controllable.

The intensity of the light emitted from the illumination source may vary. The higher the intensity, the shorter the time the light-sensitive material LSM has to be exposed to the light to cure. Hereby the speed of the exposure system ES scanning over the light-sensitive material LSM may be faster. Of course other factors are also determining for the scanning speed such as the type of light-sensitive material LSM, response time in the spatial light modulators SLM, etc.

The exposure system comprises input optics lO, at least one spatial light modulator SLM and output optics OO. Hence light from the illumination source are, by means of the input optics lO, at least partly collimated and focused onto at least some of the apertures of the at least one spatial light modulator SLM. The at least one spatial light modulator SLM then establishes a pattern of light onto the output optics OO, which again focuses the patterned light on the illumination area lA on the light-sensitive material LSM.

It should be noted that a pattern of light also includes the situation when all individual light modulators LM of the spatial light modulator SLM are in a position which either lets light through all apertures of the spatial light modulator SLM or does not let any light at all through the apertures of the spatial light modulator SLM.

The stereolithography apparatus SA comprises preferably more than 48 spatial light modulators SLM. It should be noted that the stereolithography apparatus SA is very flexible in relation to the number of spatial light modulators SLM. Hence the number of spatial light modulators SLM may vary between 1 and e.g. up to more than 100.

The individual spatial light modulators SLM may be combined in modules of four. Hence, when more than four spatial light modulators SLM are needed, more than one module are combined together forming the exposure system ES.

Each spatial light modulator SLM comprises more than 500 individually controllable light modulators LM. Of course spatial light modulators SLM with a number which differs, sometimes differs a lot, from the 500 individually controllable light modulators LM may be used. To simplify the figures, throughout this description the figures only illustrate the spatial light modulators SLM with e.g. four light modulators even though, as mentioned, there may be more than 500.

The input optics lO may, as shown in fig. 2, comprise a micro lens array. In further embodiments further micro lenses may be included in the input optics as well as other optical elements.

A purpose of the input optics is to focus the collimated light CL onto the at least one spatial light modulator SLM. As explained below, the at least one spatial light modulator SLM comprises a plurality of apertures and it is onto or down through these apertures that the micro lenses ML are focusing the collimated light CL.

The at least one spatial light modulator SLM may be used to pattern the collimated and focused light onto illumination areas lA on the light sensitive material LSM. The at least one spatial light modulator SLM comprises a plurality of individual light modulators LM also referred to as light switches, light valves, micro shutters etc.

The individual controllable light modulators LM are controlled by a control unit CU. The control unit CU may control the exposure system ES according to the digital layer-wise representation of the three-dimensional object to be built. The illustrated control unit CU may control the individual controllable light modulators LM of the at least one spatial light modulator SLM and in the case of individual light-emitting diodes LD, these may also be controlled by the control unit CU.

Where light-emitting diodes LD are used, controlling the light-emitting diodes LD means to turn the light-emitting diodes LD off if e.g. only a small part of an object or a small object is to be built, which does not require patterned light from the at least one spatial light modulator SLM included in the exposure system ES.

The controlling of the light modulators LM in the at least one spatial light modulators SLM may be done by addressing the light modulators LM according to the pattern. The pattern may represent one layer of the three dimensional object to be built.

The illustrated control unit CU may also control other part of the stereolithography apparatus SA than the exposure system ES. Alternatively the control unit CU may be included in other control systems in relation to the stereolithography apparatus SA.

The stereolithography apparatus SA may be provided with digital layer-wise descriptions of the three-dimensional object to be built. The layer-wise description of the three-dimensional object may include support structure if the three-dimensional object requires support during the building process. For each layer of the three-dimensional object, the exposure system ES is scanned across the light-sensitive material LSM and the individual digital layer-wise description of the three-dimensional object determines the pattern of light from the spatial light modulator SLM.

The output optics OO focuses the patterned light from the spatial light modulator SLM onto one or more illumination areas **IA** on the surface of the light-sensitive material LSM. Like the input optics lO, the output optics OO may comprise more than one lens system e.g. more than one array of micro lenses ML.

A preferred embodiment of part of an exposure system is shown in fig. 2. Collimated light CL is sent through a first micro lens array as part of the input optics lO, which works to focus the collimated light CL into a number of focused light beams FLB suitable for entering each individual shutter on the light modulators LM.

For each open light modulator LM the light will pass and spread out again after having passed the light modulator LM. In this shown embodiment, the output optics OO comprises two micro-lens arrays in immediate continuation of each other to focus the light, whereby desired light spots of a diameter of approximately 100 µm are obtained on a focal plane, the illumination area lA, at a distance d of approximately 2-3 mm.

In the shown embodiment this highly advantageous focusing of the light in the desired distance has been obtained by using the above-mentioned two micro-lens arrays in immediate continuation to each other with suitable parameters, namely a curvature radius of 365 µm and a back focal length of 499 µm. Together with the use of a single micro-lens array in the input optics with a curvature radius of 328.5 µm and a back focal length of 425 µm, this combination has proven to provide a highly advantageous combination of optics in the exposure system. However, further optical elements with values of these parameters in a range around such found values have also shown to provide advantageous results.

In this embodiment the used micro-lenses are part of an array comprising a number of lenses manufactured in one piece. Obviously, it would be possible to manufacture and insert individual lenses for each individual shutter, or any number of lenses other than the one shown may be combined together on one micro lens plate.

It should be clear that the embodiment shown in fig. 2 is shown solely as an example and suitable embodiments may be obtained by replacing one or more of the micro-lens arrays.

Back focal length and curvature radius are terms well-known to the skilled person; however for sake of clarity these are defined as follows.

A spherical lens has a center of curvature located in (x, y, z) either along or decentered from the system local optical axis. The vertex of the lens surface is located on the local optical axis. The distance from the vertex to the center of curvature is the curvature radius of the lens.

Back focal length (BFL) is the distance from the vertex of the last optical surface of the system to the rear focal point.

Contamination of the exposure system can be prevented or at least kept at a minimum degree by the use of one or more protective windows.

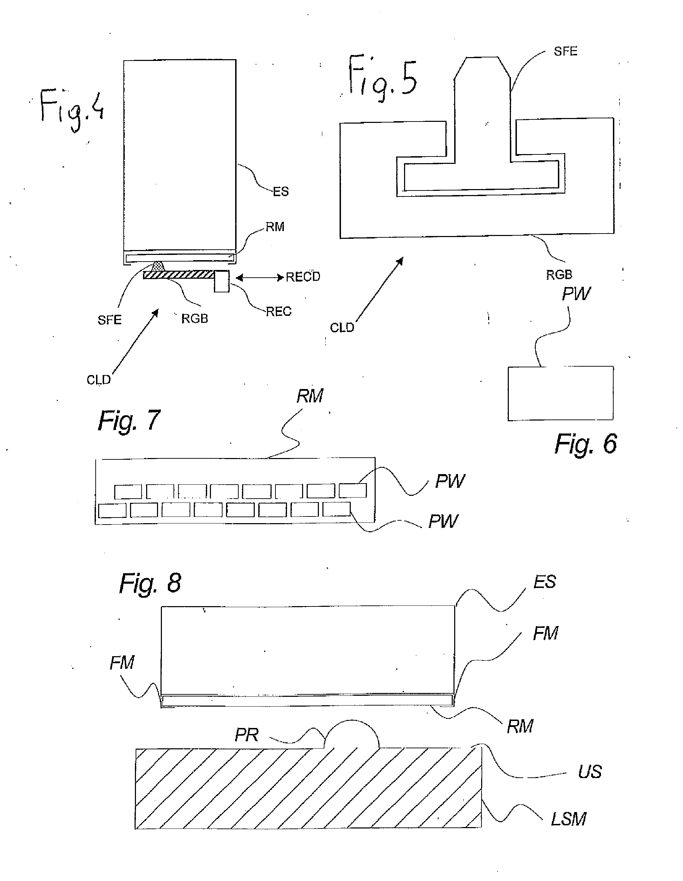

Fig. 6 shows an example of a protective window PW.

Fig. 7 shows an example of a replaceable module RM. The shown replaceable module RM comprises 16 protective windows PW; however this number may be any other suitable number according to various other embodiments of the invention. In the shown embodiment the individual protective windows PW are mutually evenly displaced in order for the SLMs below the protective windows PW to cover the full width of the scanning area. Obviously these protective windows PW may be differently distributed depending on different parameters such as the size of the scanning area etc.

Fig. 8 shows an exposure system ES on which a replaceable module RM comprising protective windows PW is mounted in fastening means FM for holding the replaceable module RM. In the shown embodiment these fastening means FM are simply rails on each side of the exposure system ES.

In another advantageous embodiment the fastening means FM is a system where the replaceable module RM can be pushed into a recess and then snapped into a fixed position.

However, a number of different suitable fastening means will be apparent for the skilled person.

A protrusion PR is shown in fig. 8, which in the shown case may be a bubble in the upper surface US of the resin LSM. Such a bubble is an example of a protrusion PR which for most resin types will very seldom occur. However, if it turns up, this may happen quite suddenly, whereby a possible detection system mounted elsewhere on the apparatus, although effective, might not be sufficient.

With the protective window(s) PW such a bubble may leave small amounts of resin on the protective window(s), but the optics is left undamaged and uncontaminated. Hereby the relatively simple process of replacing the replaceable module RM may be sufficient for being able to start the apparatus again following the occurrence of such a bubble.

Another example of a cause of a protrusion is that the curing of the resin may cause a little shrinkage. Such shrinkage may cause that uncured resin LSM surrounding the cured area is pushed up a little above the level of the surrounding resin. In this way such resin may be brought closer to or even into contact with the exposure system ES.

Another important source of contamination of the exposure system (ES), protective windows (PW) or output optics (OO) is the presence in the light sensitive material (LSM) of volatile components, like acryloyl morpholine (ACMO).

Such volatile components can evaporate and/or outgas during the curing process and then condensate onto the exposure system (ES), the protective windows (PW) and the output optics (OO). The optical path of the light beams is disturbed and the light beams are not correctly focused onto the illumination area (lA).

According to the present invention, a **cleaning device (CLD)** has been mounted in the apparatus, which is suitable to wipe the surface of the exposure system (ES) facing the illumination area (IA) and/or the surface of the **protective window (PW)** facing the illumination area (lA), so that the output optics (OO) is enabled to focus correctly the pattern of light from the spatial light modulators (SLM) onto the illumination area (lA). This allows to remove the contamination of the exposure system and to prevent damage on the built part.

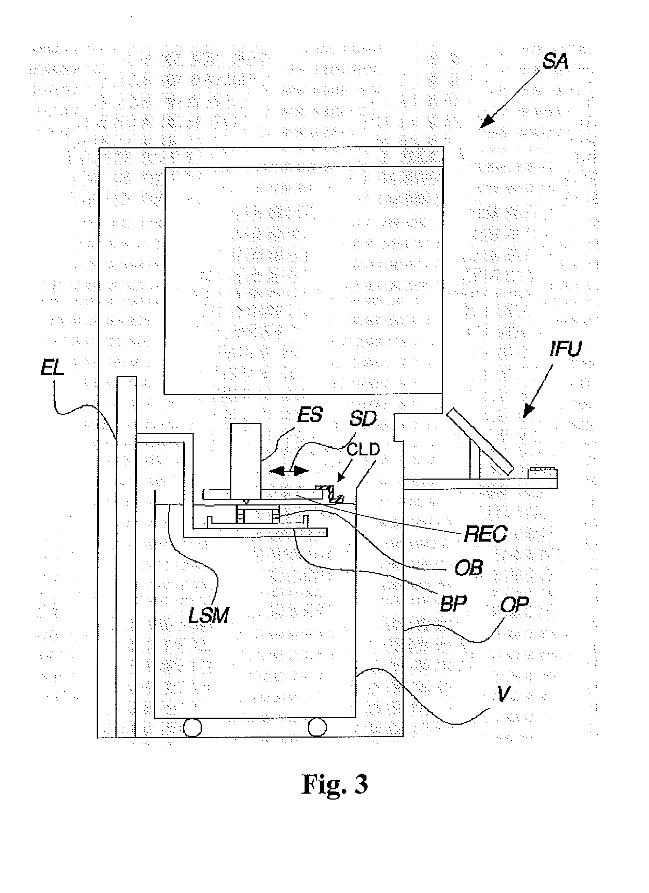

Fig. 3 shows an embodiment of an apparatus SA according to the invention. A cleaning device (CLD) is solidly mounted at the extremity of the recoater (REC). The recoater (REC) is a bar or blade which is scanned across a liquid layer of light sensitive material (LSM), in order to level the surface of the liquid light sensitive material (LSM) from which the three dimensional object (OB) is to be prepared.

According to fig. 3, the exposure system (ES) is scanned across the liquid layer of light sensitive material (LSM) in the exposure or scanning direction (SD) from the left to the right, in order to expose said layer to UV radiation, so as to solidify said layer with a predetermined pattern.

At the end of this movement the exposure system (ES) reaches a position above the cleaning device (CLD), whereby the **cleaning device (CLD)** is enabled to wipe the surface of said exposure system (ES) facing the illumination area (lA), so that possible contamination is removed from the exposure system (ES) and the output optics (OO) is enabled to focus correctly the pattern of light from the spatial light modulators (SLM) onto the illumination area (lA). The cleaning device wipes the surface to be cleaned, meaning that it **slides in contact** with such surface, so that all contaminants are removed, in particular by a mechanical effect.

Following such exposure step, a new layer is produced of liquid light sensitive material (LSM), and the recoater (REC) is scanned across said layer in a recoating direction (RECD) perpendicular to the exposure direction (SD), in order to level the surface of the liquid light-sensitive material (LSM) from which the three-dimensional object is to be prepared.

At the same time, the cleaning device (CLD) solidly mounted onto the recoater (REC) wipes the surface of the exposure system (ES) facing the surface of the liquid light-sensitive material (LSM), or the surface of a protective window (PW) facing the surface of the liquid light-sensitive material (LSM), in order to remove contamination, dust or condensed materials. The cleaning device slides in contact with the surface to be cleaned, and removes all contaminants by mechanical action.

At the end of this movement of the recoater, the surface of the exposure system (ES) facing the surface of the liquid light-sensitive material (LSM), or the surface of the protective window (PW) facing the surface of the liquid light-sensitive material (LSM), will be certainly free from any type of contamination or condensed materials. The exposure step can therefore begin again under optimal conditions.

Such cleaning process will be repeated during each movement of the recoater, continuously and automatically, during the building process of the three dimensional object.

Fig. 4 shows a part of the apparatus (SA) as in fig. 3, in a 90° rotated view.

It is evident that scanning the recoater (REC) across the photocurable resin layer in the recoating direction (RECD), in order to level the surface of the liquid light-sensitive material (LSM) from which the three-dimensional object is to be prepared, implies, at the same time, that the cleaning device (CLD) solidly mounted onto the recoater (REC) wipes the surface of the exposure system (ES) facing the surface of the liquid light-sensitive material (LSM), in order to remove contamination, dust or condensed materials. A sliding contact occurs between the cleaning device (CLD) solidly mounted onto the recoater (REC) and the surface to be cleaned.

According to fig. 4, the exposure system (ES) exhibits a replaceable module **(RM)** carrying protective windows (PW), and the cleaning device (CLD) comprises a rigid base (RGB) and at least one **soft wiping element (SFE)**, which is attached to said rigid base (RGB) and which is suitable to wipe the surface of said exposure system (ES) facing the illumination area (lA) or the surface of said protective window (PW) facing the illumination area (lA).

Fig. 5 depicts a detail of fig. 4 with the cleaning device (CLD), whereby it is clarified how the soft **wiping element (SFE)**, wiping and cleaning the surface of the exposure system (ES), is mounted and inserted into a rigid base (RGB).

The fact to integrate into the apparatus (SA) a cleaning tool (CLD) which slides against the protection plate (PW) and cleans the contaminants during the building process, so that the building process is not interrupted, exhibits exceptional surprising advantages.

The building process involves a motion of a recoater (REC) in succession with the motion of the exposure system (ES). It is very advantageous to attach mechanically the cleaning tool to the recoater, so that the motion of the recoater is also used as the motion of the cleaning tool. This avoids the need to add other mechanical axis, motor or movable parts into the stereolithography apparatus, thereby reducing costs and complexity. It also improves the building speed, as two steps (i.e. recoating and cleaning) are performed simultaneously.

The cleaning tool (CLD) consists essentially of a rigid base (RGB), which is mechanically coupled to or is an integral part of the recoater motion axis (REC). One or more soft elements (SFE) are attached to this rigid base (RGB). The rigid base and the soft elements are so dimensioned, that the soft elements are in contact with and cover the whole or part of the glass protection windows (PW) during the recoating step of the building process. The soft elements follow, adapt and conform to the surface of the removable protection plate (RM), and maintain a sliding contact during the cleaning process.

It is preferred that the soft elements are made of a material that can absorb the contaminants instead of just wiping them away and the soft elements are also chemically resistant to the contaminants. Open celled polymer foam structures are suitable for this purpose. A particularly suitable material is open celled foam made of melamine formaldehyde which is commercially available under the name Basotect® by the company BASF. In this way, the cleaning device not only wipes away the contaminants by mechanical action, but also absorbs the contaminants, cleaning perfectly the concerned surface.

The soft elements (SFE), which absorb the contaminants, may become saturated with the contaminants over time or mechanically deteriorate after prolonged usage, due to the sliding contact with the protection plate. It is therefore desired that the rigid base and the soft elements are attached in such a way that the soft elements can be easily removed and replaced by the user (e.g. before the start of a building process), for example through a snap-in or sliding connection.

In an advantageous embodiment of the invention the exposure system comprises modules of spatial light modulators (SLM), wherein each module comprises more than one spatial light modulator.

In an advantageous embodiment of the invention the input optics is made of modules, hence one input optics module corresponds to one module of spatial light modulators.

In an advantageous embodiment of the invention the output optics is made of modules, hence one output optics module corresponds to one module of spatial light modulators. The modular structure of the exposure system, the input optics and the output optics facilitates easy modification of the exposure system e.g. to meet specific user defined requests for the size of the illuminations system.

In an advantageous embodiment of the invention the input and output optics are made of modules, hence one input and one output optic module corresponds to one spatial light modulator.

In an advantageous embodiment of the invention the light modulators of the spatial light modulator pattern the light from the illumination source. The light-sensitive material is cured in a pattern in dependence on the position of the light modulators in the spatial light modulator.

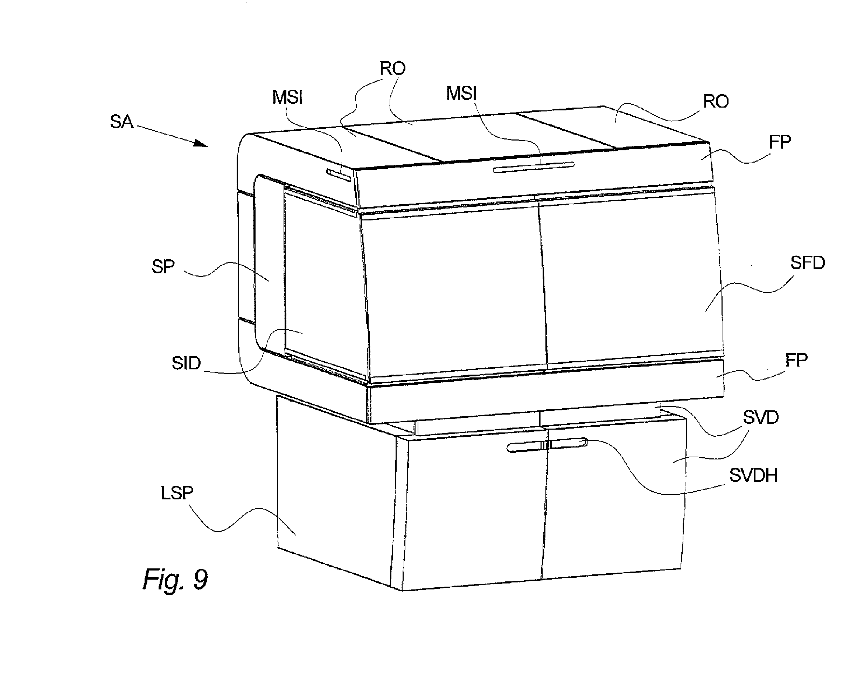

Figure 9-11 illustrates only one possible embodiment of the stereolithography apparatus SA according to the invention. It should be noted that not all below mentioned features are necessary for the stereolithography apparatus SA to operate. Furthermore it should be noted that not all details of the stereolithography apparatus SA are illustrated and that additional, not illustrated, parts may be advantageous.

Figure 9 illustrates the stereolithography apparatus SA in a front / side view according to an aspect of the invention.

The stereolithography apparatus SA may be equipped with one or more sliding vat doors SVD, which may e.g. be opened by means of a sliding vat door handle SVDH, which is operated e.g. by pushing, turning, etc.. The sliding vat door SVD may give access to the vat V (not shown) by means of sliding to one side or by means of pivoting around one or more hinges.

One or more sliding front doors SFD may be positioned in relation to one or more front panels FP and side panels SP.

The sliding front door SFD may give access to the exposure system ES (not shown) by means of sliding to one side or by means of pivoting around one or more hinges. It should be noted that the sliding front doors SFD may be transparent so that the building process can be monitored without opening the sliding front door SFD.

The one or more front panels FP may extend to the side of the stereolithography apparatus SA. The one or more front panels FP may be equipped with one or more machine status indicators MSI , indicating the status (e.g. in operation, stopped, fault, etc.) of the machine or at which stage of a building process the stereolithography apparatus SA is at a given time. The machine status indicator MSI may also be located on the roof RO or side of the stereolithography apparatus SA and it may e.g. comprise a display, lamps, sirens etc.

Furthermore the stereolithography apparatus SA may be equipped with one or more side doors SID and one or more lower side panel LSP, which are not in use under normal operation of the stereolithography apparatus SA. The side doors SID and the lower side panel LSP are only dismounted or opened when parts of the stereolithography apparatus SA are to be maintained.

It should be noted that the side doors SID may according to an aspect of the invention be part of the sliding front door SFD and the lower side panel LSP may according to an aspect of the invention be part of the sliding vat door SVD.

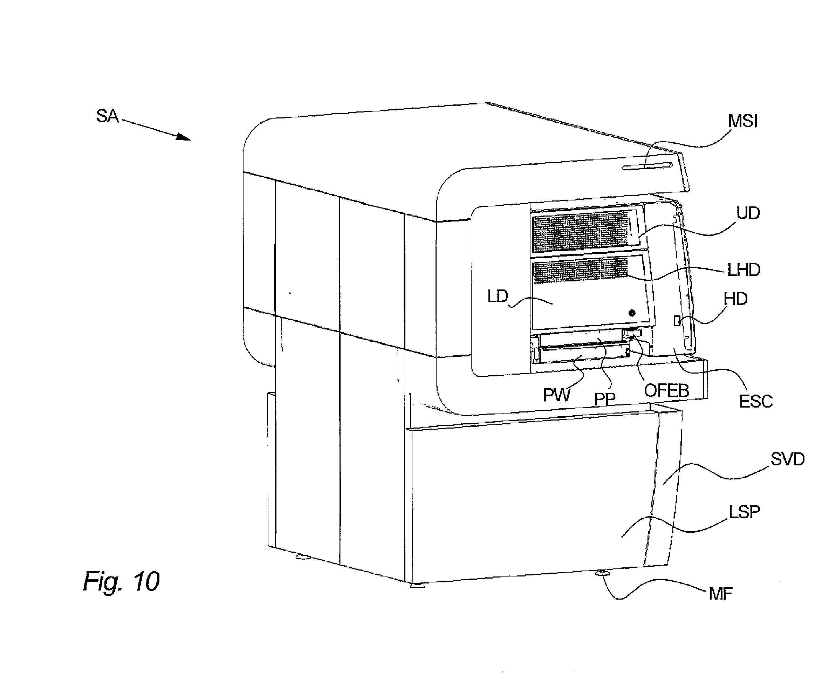

Figure 10 illustrates the stereolithography apparatus SA in a back / side view according to an aspect of the invention, where the side door SID and the sliding front door SFD are dismounted revealing the exposure system ES.

The stereolithography apparatus SA may according to an aspect of the invention stand on one or more machine feet MF, which may be adjustable. This may make easier installing the stereolithography apparatus SA, so that when the vat V (not shown) is located into the stereolithography apparatus SA the surface of the light-sensitive material LSM and the output optics OP (not shown) are substantially parallel.

The illustrated exposure system ES comprises an upper left side door UD and a lower left side door LD used when maintaining or servicing the exposure system ES. Furthermore, the exposure system comprises a lamp housing door LHD for accessing the illumination source IS (not shown). Furthermore the exposure system ES comprises a protection plate PP for protecting the different parts of the illumination unit lU (not shown). The side of the protection window PW is also illustrated on figure 10 together with the outer frame of the exposure bar OFEB

A handle HD for releasing the protection window PW (not shown) may be located in the exposure system casing ESC.

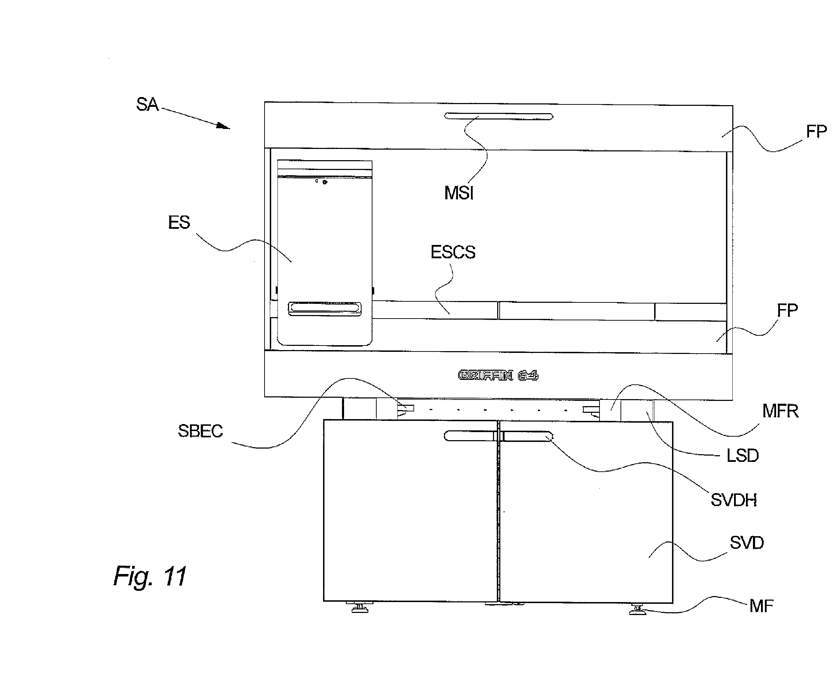

Figure 11 illustrates the stereolithography apparatus SA in a front view according to an aspect of the invention, where the sliding front door SFD is removed. The exposure system ES is moving in a exposure system carriage slit ESCS, when scanning across the light-sensitive material LSM (not shown). Furthermore figure 11 illustrates the machine frame MFR around which the machine is build and a support base for exposure system energy chain SBEC.

The present invention exhibits notable and unexpected advantages for the infra red powder sintering of materials, whereby large surfaces can be rapidly treated with high precision

## Claims

1. Apparatus (SA) for producing a three-dimensional object (OB) from a light-sensitive material (LSM), said apparatus comprising:
an exposure system (ES) with an illumination source,
a scanning bar to which the exposure system (ES) is mounted,
a control unit (CU),
whereby said exposure system (ES) comprises:
at least one spatial light modulator (SLM) with a plurality of individually controllable light modulators (LM),
input optics (lO) optically coupled to said at least one spatial light modulator (SLM),
output optics (OO) optically coupled to said at least one spatial light modulator (SLM),
wherein said input optics (lO) and output optics (OO) facilitates transmission of light emitted from said illumination source via said individually controllable light modulators (LM) of said spatial light modulator (SLM) to an illumination area (lA),
wherein said spatial light modulator (SLM) enables an establishment of a pattern of the light transmitted through said input optics (lO), according to control signals originating from said control unit (CU),
wherein said output optics (OO) enable focusing of the pattern of light from said at least one spatial light modulator (SLM) onto an illumination area (lA),
wherein the distance d between the output optics (OO) and the illumination area (lA) is between 0.5 and 20 mm,
**characterized in that**
said apparatus (SA) exhibits a **cleaning device (CLD)** suitable to clean or wipe the surface of said exposure system (ES) facing said illumination area (IA), so that said output optics (OO) is enabled to focus correctly the pattern of light from said at least one spatial light modulator (SLM) onto the illumination area (lA) .

2. Apparatus (SA) for producing a three-dimensional object (OB) from a light-sensitive material (LSM), said apparatus comprising:
an exposure system (ES) with an illumination source,
a scanning bar to which the exposure system (ES) is mounted,
a control unit (CU),
whereby said exposure system (ES) comprises:
at least one spatial light modulator (SLM) with a plurality of individually controllable light modulators (LM),
input optics (lO) optically coupled to said at least one spatial light modulator (SLM),
output optics (OO) optically coupled to said at least one spatial light modulator (SLM),
wherein said input optics (lO) and output optics (OO) facilitates transmission of light emitted from said illumination source via said individually controllable light modulators (LM) of said spatial light modulator (SLM) to an illumination area (IA),
wherein said spatial light modulator (SLM) enables an establishment of a pattern of the light transmitted through said input optics (lO), according to control signals originating from said control unit (CU),
wherein said output optics (OO) enable focusing of the pattern of light from said at least one spatial light modulator (SLM) onto an illumination area (lA),
wherein said apparatus comprises at least one releasable protective window (PW) between said output optics (OO) and said illumination area (lA),
wherein said at least one protective window is positioned at a distance of less than 10 mm, preferably less than 5 mm, more preferably less than 2 mm from said output optics,
**characterized in that**
said apparatus exhibits a **cleaning device (CLD)** suitable to clean or wipe the surface of said **protective window (PW)** facing said illumination area (lA), so that said output optics (OO) is enabled to focus correctly the pattern of light from said at least one spatial light modulator (SLM) onto the illumination area (lA).

3. Apparatus according to claim 2, wherein said at least one protective window is part of a **replaceable module (RM)** and said replaceable module is mounted on said exposure system (ES).

4. Apparatus for producing a three-dimensional object from a light-sensitive material according to any of the preceding claims,
wherein said input optics (lO) and output optics (OO) facilitates transmission of light emitted from said illumination source as at least two light beams via said individually controllable light modulators (LM) of said spatial light modulator (SLM) to an illumination area (lA),
and/or wherein said output optics (OO) comprises at least one array of micro lenses (ML) and said output optics (OO) has such characteristics that it is able to focus the pattern of light onto the illumination area (lA) in such a way that the focusing distance d between the output optics (OO) and the illumination area (lA) is between 0.5 and 20 mm.

5. Apparatus according to any of the preceding claims, wherein said apparatus comprises a **recoater (REC)** for levelling the surface of the light-sensitive material (LSM) from which the three-dimensional object is to be prepared, and wherein said cleaning device (CLD) is solidly mounted on said recoater (REC).

6. Apparatus according to any of the preceding claims, wherein said cleaning device (CLD) comprises a rigid base (RGB) and at least one **soft wiping element (SFE)**, which is attached to said rigid base (RGB) and which is suitable to wipe the surface of said exposure system (ES) facing the illumination area (lA) or the surface of said protective window (PW) facing the illumination area (lA).

7. Apparatus according to claim 6, wherein said soft wiping element (SFE) is made of an absorbing material, for example open celled polymer foams or melamine formaldehyde, and is removably attached to said rigid base (RGB).

8. Apparatus according to any of the preceding claims, wherein said apparatus comprises a vat comprising as a light-sensitive material a liquid photocurable composition in an amount so that the surface of said photocurable composition substantially coincides with said illumination area,
whereby said photocurable composition comprises at least one component bearing at least a polymerizable group and exhibiting an average molecular weight lower than 1000 g/mol, preferably lower than 500 g/mol, more preferably lower than 300 g/mol, in particular a mono- or diacrylate, an acrylamide, a vinylether, or acryloylmorpholine (ACMO).

9. Apparatus according to claim 8, wherein the minimum distance between said output optics and said surface of said light-sensitive material is between 0.5 mm and 20 mm, preferably between 1 mm and 10 mm.

10. Method of manufacturing a three-dimensional object (OB) from a light-sensitive material (LSM) by use of an apparatus (SA) according to any of the claims 1 to 9.

11. Method for manufacturing a three-dimensional object (OB) from a light-sensitive material (LSM), comprising the steps of:
A. producing a first layer of a liquid light-sensitive material (LSM);
B. cleaning or wiping with a cleaning device (CLD) the surface of an exposure system (ES) facing the surface of the liquid light-sensitive material (LSM) or the surface of a protective window (PW) facing the surface of the liquid light-sensitive material (LSM), in order to remove contamination, dust or condensed materials;
C. **scanning an exposure system (ES)** across said first layer in a predetermined exposure direction (SD), in order to expose said first layer to UV radiation, so as to solidify said first layer with a predetermined pattern;
D. applying a second layer of a liquid light-sensitive material onto the first solidified layer;
E. cleaning or wiping with a cleaning device (CLD) the surface of an exposure system (ES) facing the surface of the liquid light-sensitive material (LSM) or the surface of a protective window (PW) facing the surface of the liquid light-sensitive material (LSM), in order to remove contamination, dust or condensed materials;
F. scanning the exposure system (ES) across said second layer in the predetermined exposure direction (SD), in order to expose said second layer to UV radiation, so as to solidify said second layer with a predetermined pattern;
G. repeating the steps A. to F. until a predetermined 3-dimensional object (OB) is formed.

12. Method for manufacturing a three-dimensional object (OB) from a light-sensitive material (LSM), comprising the steps of:
a) producing a first layer of a liquid light-sensitive material (LSM);
b) **scanning a recoater (REC)** across said first layer in a recoating direction (RECD), in order to level the surface of the liquid light-sensitive material (LSM) from which the three-dimensional object is to be prepared,
whereby, at the same time, a cleaning device (CLD) solidly mounted onto the recoater (REC) cleans or wipes the surface of an exposure system (ES) facing the surface of the liquid light-sensitive material (LSM) or the surface of a protective window (PW) facing the surface of the liquid light-sensitive material (LSM), in order to remove contamination, dust or condensed materials;
c) **scanning an exposure system (ES)** across said first layer in a predetermined exposure direction (SD) perpendicular to the recoating direction (RECD), in order to expose said first layer to UV radiation, so as to solidify said first layer with a predetermined pattern;
d) applying a second layer of a liquid light-sensitive material onto the first solidified layer;
e) scanning the recoater (REC) across said second layer in the recoating direction (RECD), in order to level the surface of the liquid light-sensitive material (LSM) from which the three-dimensional object is to be prepared,
whereby, at the same time, the cleaning device (CLD) solidly mounted onto the recoater (REC) cleans or wipes the surface of the exposure system (ES) facing the surface of the liquid light-sensitive material (LSM) or the surface of the protective window (PW) facing the surface of the liquid light-sensitive material (LSM), in order to remove contamination, dust or condensed materials;
f) scanning the exposure system (ES) across said second layer in the predetermined exposure direction (SD) perpendicular to the recoating direction (RECD), in order to expose said second layer to UV radiation, so as to solidify said second layer with a predetermined pattern;
g) repeating the steps a) to f) until a predetermined 3-dimensional object (OB) is formed.

13. Method of manufacturing a three-dimensional object from a light-sensitive material according to claim 10, 11 or 12 by use of an apparatus according to claim 5, wherein the recoater (REC) is scanned across said light-sensitive material (LSM) for levelling the surface of the light-sensitive material (LSM) from which the three-dimensional object is to be prepared, and, at the same time, the cleaning device (CLD), solidly mounted at the extremity of the recoater (REC), **slides in contact** with the surface of the exposure system (ES) facing the surface of the liquid light-sensitive material (LSM) or the surface of the protective window (PW) facing the surface of the liquid light-sensitive material (LSM), in order to remove possible contamination, dust or condensed materials.

14. Method of manufacturing a three-dimensional object from a light-sensitive material according to any of the claims 10 to 13 by use of an apparatus according to claim 6, wherein the at least one soft wiping element (SFE) slides in contact with the surface of said exposure system (ES) facing the surface of the liquid light-sensitive material (LSM) or the surface of said protective window (PW) facing the surface of the liquid light-sensitive material (LSM) during the recoating step, in order to remove contamination, dust or condensed materials.

15. Three-dimensional object produced by an apparatus according to any of the claims 1 to 9 or by a method according to any of the claims 10 to 14.
